# EUROPEAN PATENT APPLICATION

(11) **EP 2 051 157 A1**
(43) Date of publication of application: **22.04.2009**
(21) Application number: 07118532.6
(22) Date of filing: 15.10.2007
(51) Int. Cl.: G06F 1/32, H04M 1/73

(54) **Method and System for Enabling or Disabling Features Based on a Battery Level Threshold**

(71) Applicant: Research In Motion Limited, Waterloo, Ontario N2L 3W8 (CA)
(72) Inventor: Martin-Cocher, Gaelle, Toronto Ontario M6S 2Y2 (CA); Shenfield, Michael, Richmond Hill, Ontario L4C 3S9 (CA)
(74) Representative: Rickard, David John

(57) **Abstract**

A method and apparatus for enabling or disabling a feature in a mobile device based on a battery level threshold, the method including: checking a battery level (112); determining whether the battery level is above or below a predetermined threshold for the feature (117,120); and enabling (118) or disabling (122) the feature based on the result of the determining step (117,120). Further, a method and server application for enabling or disabling a feature based on a battery level threshold, the method including: obtaining a battery level at a server application; comparing the battery level with a preconfigured threshold for the feature; and modifying data or a data type to be sent to the mobile device based on the result of the comparing step.

## Description

### FIELD OF THE DISCLOSURE

The present disclosure relates to task or function management and in particular to task or function management based on battery life in a mobile device.

### BACKGROUND

Modern mobile devices include expanding capabilities and features, with many of these expanding capabilities or features being "power hungry" applications. Examples of such power hungry applications include multimedia applications, such as music, television, high resolution images, global positioning system applications, video conferencing, expanded internet browsing, gaming, among others.
When a device runs at a low battery level, key device features may be jeopardized by the use of "power hungry" applications. Such applications may further drain the battery causing data to be lost, radio connections to be lost, among others.

### SUMMARY

The present disclosure provides for a method for enabling or disabling a feature based on a battery level threshold comprising: checking a battery level; determining whether the battery level is above or below a predetermined threshold for the feature; and enabling or disabling the feature based on the result of the determination.

The present disclosure further provides for a mobile device adapted to enable or disable a feature based on a battery level threshold comprising: a battery status module adapted to check a level of a battery; a configuration module adapted to store a battery level threshold for the feature; and a processor adapted to compare the level of the battery with the battery level threshold for the feature and further adapted to enable or disable the feature based on the comparison.

The present disclosure further provides for a method for enabling or disabling a feature based on a battery level threshold comprising: obtaining a battery level at a server application; comparing the battery level with a preconfigured threshold for the feature; and modifying data or a data type to be sent to the mobile device based on the result of the comparison.

The present disclosure further provides for a server application adapted to enable or disable a feature based on a battery level threshold comprising: a communications subsystem adapted to receive a battery level of a mobile device; a comparison module adapted to compare the battery level with a preconfigured threshold for the feature; and a processor adapted to modify a data or data type to be sent to the mobile device based on a result from the comparison module.

### BRIEF DESCRIPTION OF THE DRAWINGS

The present disclosure will be better understood with reference to the drawings in which:
Figure 1 is a flow chart illustrating an exemplary method in accordance with the present disclosure;
Figure 2 is an exemplary user interface for setting features and battery level thresholds in accordance with the present disclosure;
Figure 3 is a block diagram illustrating a simplified mobile device in which a task scheduler enables or disables features;
Figure 4 is a block diagram illustrating a simplified mobile device in which applications enable or disable features;
Figure 5 is a flow chart illustrating an exemplary method for an application to determine which run time to use;
Figure 6 is a dataflow diagram showing a mobile device notifying a server application of a battery level;
Figure 7 is a dataflow diagram showing a server application requesting a battery level;
Figure 8 is a block diagram of a simplified server application; and
Figure 9 is a block diagram of an exemplary mobile device apt to be used with the present method and system.

### DETAILED DESCRIPTION

The present disclosure provides for a method and system to disable or enable tasks, functions or applications, collectively referred to herein as "features", based on a battery level threshold.

### Mobile Side Actions

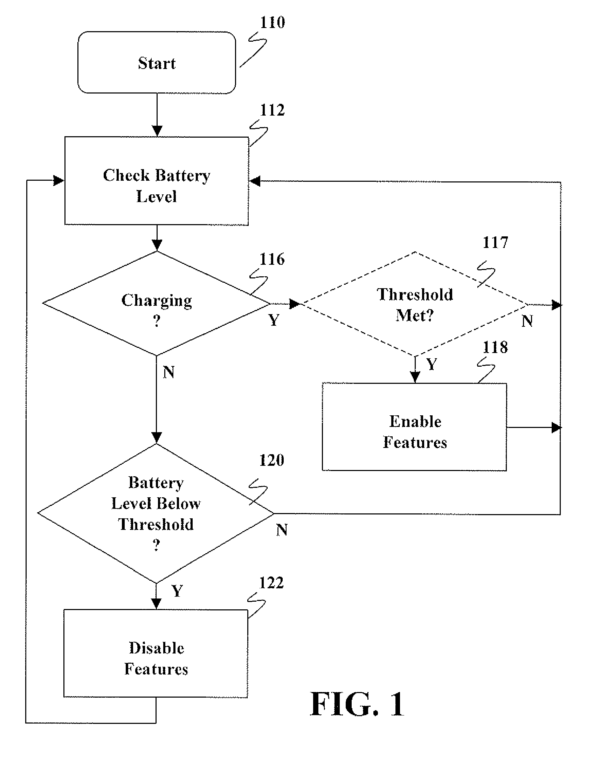

Reference is now made to **Figure 1. Figure 1** illustrates a flow chart of an exemplary method for the disabling of features based on a battery level threshold. A feature, is used with reference to **Figure 1** and with reference to the remaining disclosure, could include functions, tasks, applications or other resources that can be turned on or off on the mobile device or based on a notification from the mobile device and received from a server.

The process of **Figure 1** starts at step **110** and proceeds to step **112** in which the battery level of a mobile device is checked. As will be appreciated by those skilled in the art, various means for checking battery levels exist and the present disclosure is not limited to any particular way of checking a battery level on a mobile device. Further, instead of checking the battery level, a notification could be received about the battery level. In either case, in step **112** the level of the battery is determined.

The process then proceeds to step **116** in which a check is made to see whether or not the battery is currently being charged. As will be appreciated by those skilled in the art, once the device is plugged in, if the battery level is increasing then restrictions on functions may not be necessary.

If the mobile is found to be charging in step **116,** the process proceeds to step **118** in which certain features, which may have previously been disabled are enabled, and the process proceeds back to step **112** in which the battery level is checked.

As will be appreciated by those skilled in the art, in some instances it may not be desirable to enable features immediately upon the mobile device beginning to charge. It may be preferable to wait until the battery level reaches a threshold before enabling certain features. In this case, an optional step **117** could exist between steps **116** and **118** in which a check is made to see whether or not a predetermined threshold has been reached and only if 'yes', then the process would proceed to step **118**. Otherwise, the process would proceed from step **117** directly back to step **112.**

From step **116**, if the battery is not being charged, the process proceeds to step **120** in which a check is made to see whether the battery level is below a threshold.

If, at step **120,** it is determined that the battery level is below a threshold, the process proceeds to step **122** in which features are disabled based on preconfigured settings on the mobile device. The process then proceeds back to step **112** to check the battery level again.

From step **120**, if the battery level is not below the threshold, the process proceeds back to step **112** to continue checking the battery level.

As will be appreciated by those skilled in the art, various granularity could be introduced in step **120**. Specifically, thresholds could be defined at various battery levels to disable certain features at those various battery levels. Thus, for example, when the battery level reached 20% of the battery capacity, features such as short-range wireless communications on the mobile device could be disabled. Subsequently, if the threshold reached 15% of the battery capacity of the mobile device, music applications with streaming capabilities could be disabled. If the battery level reached 10% of the device's battery capacity, then virus scanning could be disabled on the device. As will be appreciated, these are only examples of the various granularity possible at step **120** and other examples would be known to those skilled in the art with reference to the present disclosure.

The disabling of features in step **122** could be defined based on configurations stored on the mobile device. These features could be disabled or altered based on a threshold that is set by a device manufacture, service provider, a user or a combination of any of the three. Further, default configurations can be provided.

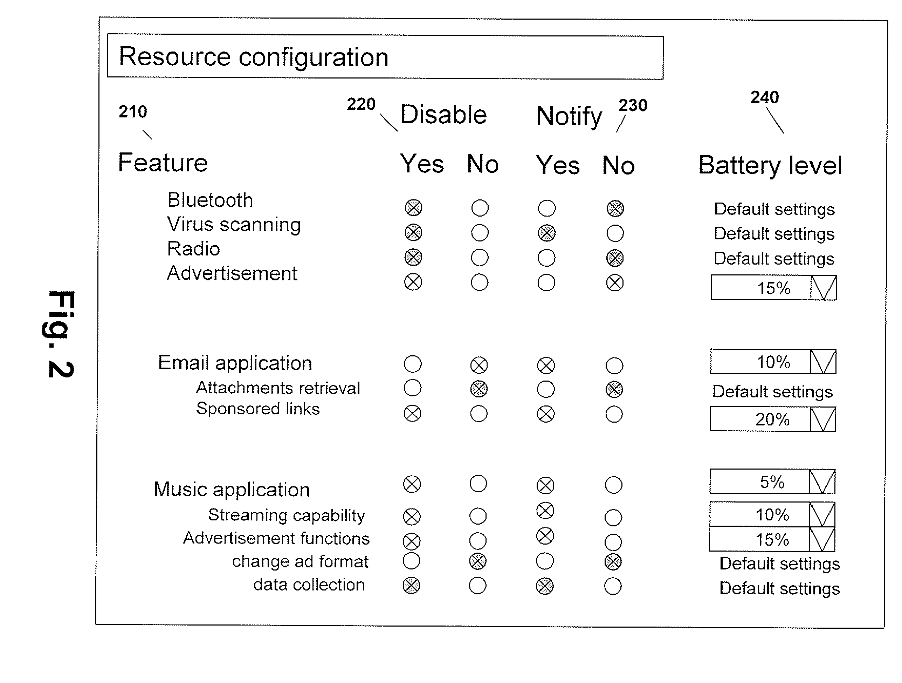

Reference is now made to **Figure 2. Figure 2** shows an exemplary user interface for disabling or altering features based on a battery level. The exemplary user interface of **Figure 2** could be provided to a user on the mobile device to allow the user to customize the settings of his or her mobile device based on the battery level.

The user interface includes a feature column **210** providing features that could be suspended or altered based on the battery level and preconfigured thresholds. As will be appreciated by those skilled in the art, an application is a feature. An application module is a feature. A device run time, such as an operating system or a java virtual machine, has features. Device hardware has features. Other aspects of the device also have features. All these features could be suspended or altered.

In the example of **Figure 2**, features include Bluetooth^{™}, virus scanning, radio, advertisement, an e-mail application, and a music application. Aspects of the e-mail application include attachment retrieval and sponsored links. Aspects of the music application include streaming capabilities, advertisement functions, changing advertising formats and data collection.

The user interface of **Figure 2** further includes a disable radio button column **220,** a notify radio button column **230** and a battery level threshold setting **240.**

In some cases, a device provider may lock certain fields, thereby not allowing the user to change the default settings provided by the device provider. In the example of **Figure 2****,** Bluetooth, virus scanning and radio features are locked onto the default settings. In this case, the disabling of Bluetooth occurs at a default threshold level and no notification is provided to the user. The disabling of virus scanning also occurs at a default threshold level. This could be the same default threshold from the Bluetooth level. Further, when virus scanning is disabled a notification is provided to the user.

Similarly, the radio could be disabled at a certain threshold and notification is provided to the user.

In the example of **Figure 2****,** the advertisement feature is controllable by a user. Advertisement is allowed to be disabled by selecting the 'yes' radio button in disable radio button column **220.** Further, no notification is required based on the 'no' radio button being selected in the notify radio button column **230.**

The user can also set the battery level threshold. In battery level threshold column **240** the user in this case could, for example, select that if the battery level drops below 15% of the battery capacity, advertisement will be disabled without notifying the user.

Similarly, the e-mail application is selected to not be disabled but a notification is provided to the user if the battery level falls below 10%.

Within the email application, attachment retrieval is set as a default to not be disabled and no notification is provided if the battery level falls below a certain threshold.

However, the sponsored links feature is set to be disabled by the user, the user should be notified if the battery level falls below 20% of the capacity of the battery.

With regard to a music application, the example of **Figure 2** provides that the music application is disabled with a notification to the user if the battery level falls below 5% of the battery capacity. Further, the streaming capabilities of the music application are disabled and the user is notified if the battery level falls below 10% of the battery level.

Advertisement functionality of the music application are also disabled with a notification to the user if the battery level falls below 15% of the battery capacity.

Thus, from **Figure 2**, the device slowly reduces features for the music application as the battery level drops. A user of the mobile device using the music application will first receive a notification indicating that advertisement functionality on the device has been disabled. As will be appreciated by those skilled in the art, this advertisement functionality could include, for example, providing ads to a user. It could, however, also include providing directed ads to a user. Thus, for example, if advertisement is linked to the music that the user is listening to, this functionality may be disabled when the battery threshold reaches 15% and instead default advertisements could be provided to the user.

If the user continues using the music application, when the battery level falls below 10% the streaming capability of the music application is disabled with a notification to the user. As will be appreciated, this could save battery life since the external connection requiring the streaming which may be a battery drain could be disabled. Thereafter, the music application could use pre-stored music for the user.

Finally, from the example of **Figure 2****,** if the user continues using the music application the music application will end with a notification to the user when the battery level reaches a 5% threshold.

The example of **Figure 2** also indicates that various settings, including changing the ad format and data collection are default settings.

In another embodiment, a "default setting" in battery level column **240** may merely indicate that a user has not changed the default. In this case, the default setting may be adjusted by a user. Thus, for example, the data collection field could be modified by a user to change from default setting to, for example, 10% to indicate that data collection will be disabled when the battery level reaches 10%.

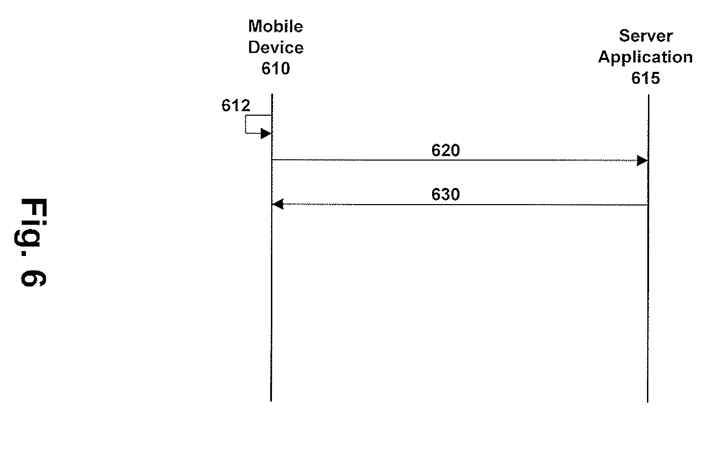

With regards to notifications, in one embodiment a notification can also be provided to the server application of a service provider. In that case, the server application can modify data or data types that are being sent based on the notification. This is described in more detail with reference to **Figures 6** to **8** below.

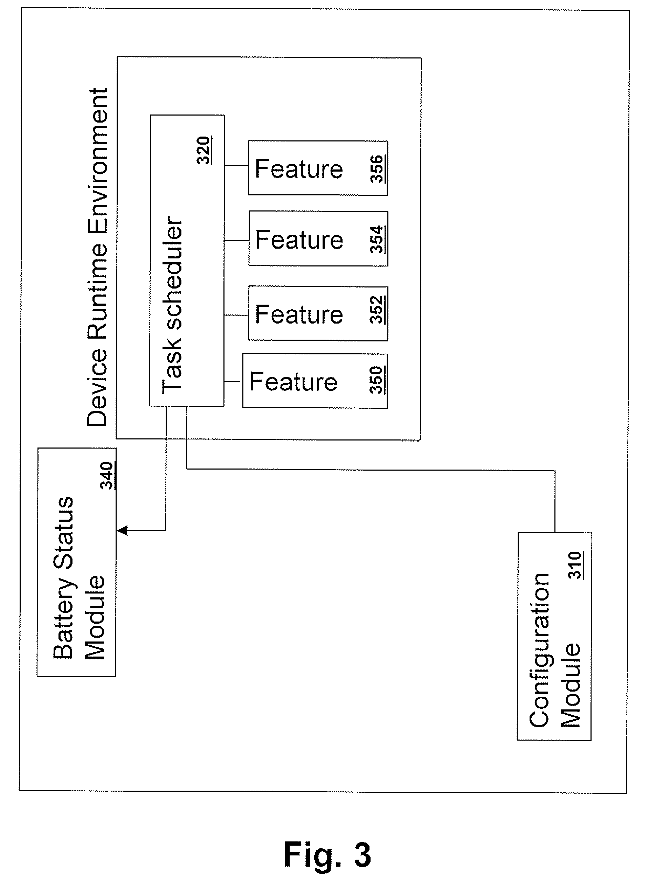

Reference is now made to **Figure 3. Figure 3** illustrates a block diagram of an exemplary mobile device having various functional modules adapted to implement the method of the present disclosure.

In particular, a configuration module **310** utilizes the configuration set up, for example, using the user interface of **Figure 2****.**

A task scheduler **320** communicates with a configuration module **310** and further checks the battery status from a battery status module **340**. Task scheduler **320** utilizes the battery status from battery status module **340** and the settings from configuration module **310** in order to enable or disable features **350, 352, 354** and **356**. Features **350**, **352, 354** and **356** correspond with the setup utilized by configuration module **310.**

As will be appreciated by those in the art, the device may check the battery status on a recurrent basis or on specific events such as the user opening a new application or when the device is plugged in and charging. Further, instead of explicitly checking the battery, task scheduler **320** could receive a notification from a battery status module **340.**

The above could be used in a number of situations. One example is if the application contains optional functions. Upon detection of a certain threshold, the device may disable the optional functions of the application with or without notifying the server application.

Another example would be to disable some features of the device that are not in usage by the current running applications. For example, if the user is browsing the Internet over a cellular network but the Bluetooth connection on the device is still running, if the low battery threshold is detected, the Bluetooth connection could be suspended. In another embodiment, if the battery level is detected to be below a certain threshold, the period of time before an application goes into an idle state could be shortened.

In another example, features or functions of an application could be disallowed if the application could continue to work with less accurate behavior. An example of this is a mobile advertising service provided along with a web browsing application. The mobile advertising service may have scanning functionality or matching criteria functionality used to provide advertising related to content the user is creating or consuming. The scanning functionality or matching criteria could be disabled if the battery level falls below a threshold. The advertisement service would continue to run but the relevance of the advertisements sent would be less targeted to the particular user.

In another example, an application may not allow a user to use full screen video in a given application, even if the user has requested it. The user may be notified of the reason for the functional limitation of the application.

In another example, a user may be disallowed to transmit attachments within a service, such as e-mail.

In yet another example, functions that are not for immediate usage could be disabled within an application. For instance, a quality of experience measurement and/or tracking reporting could be put on hold until the battery charge meets a battery level threshold.

In a further embodiment, the method of **Figure 1** could be utilized by an application itself. An example of such a "well behaved" application could be an application that monitors the battery level threshold itself and adjusts its operations according to the battery level. For example, a database application that indexes data in the embedded database could suspend the indexing when the battery level is low.

In a further embodiment, a database application or an arbitrary transactional application could perform all outstanding transactions upon the detection of a low battery level in order to avoid losing data or data integrity after battery drain. For example, a transactional application such as a catalogue shopping application could complete the shopping transaction prior to the battery being drained.

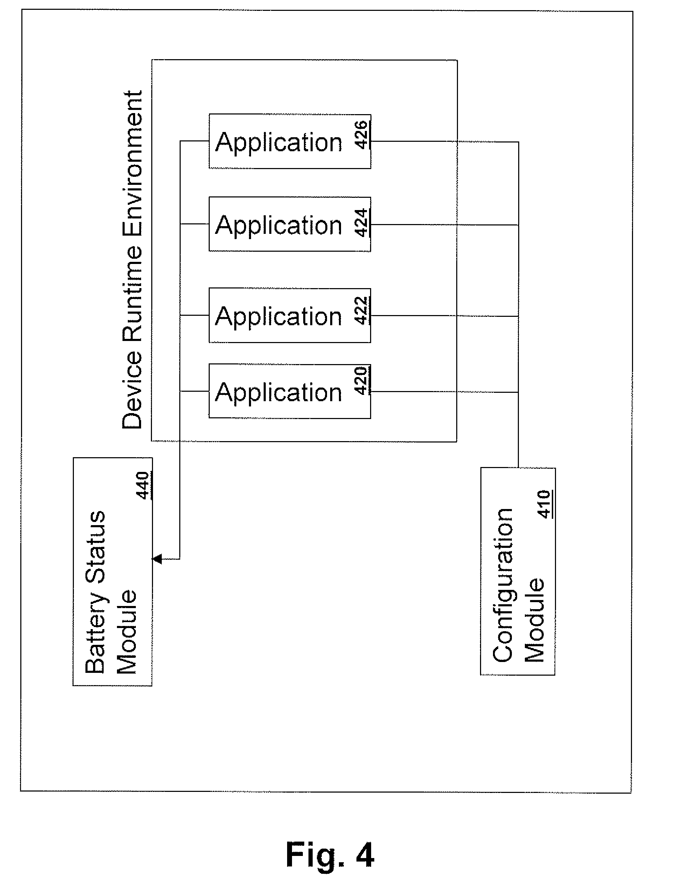

Reference is now made to **Figure 4. Figure 4** illustrates an exemplary mobile device implementation in which run time functionality is delegated to applications. Upon detection or notification of a battery status, information from the configuration module **410** is verified and upon detection of a match to a certain threshold, the behavior of the application is modified.

Thus, a configuration module **410** utilizes a user interface such as that described with regards to **Figure 2****.** Further, applications **420, 422, 424** and **426** may or may not be running on the device. If the application **420, 422, 424** or **426** is running, the application also checks the battery status or is notified of the battery status from a battery status module **440** and compares this with the configuration module thresholds from configuration module **410.**

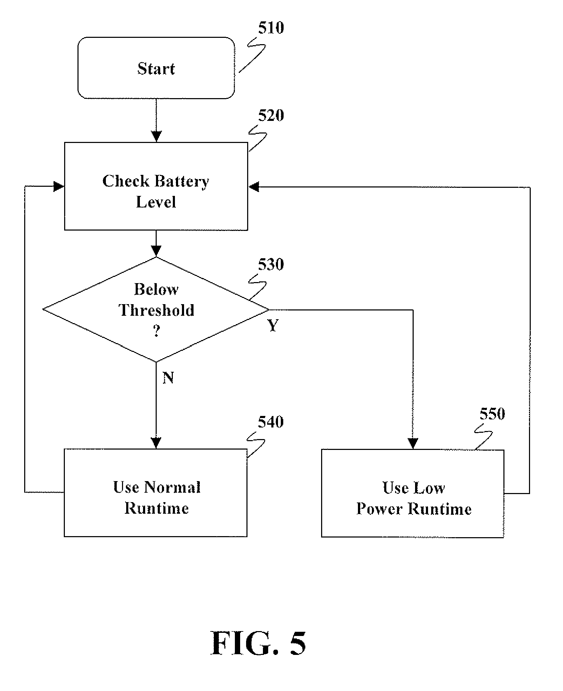

Specific embodiments of this are described with reference to **Figures 5** and **6****.**
**Figure 5** is a flow chart illustrating an application utilizing different means to achieve the same function.

The process starts at step **510** and proceeds to step **520** in which a check of the battery is made. As will be appreciated, step **520** could also be a notification to the application that a low battery threshold has been reached.

From step **520**, the process proceeds to step **530** in which a check is made to see whether the battery level is below a threshold. As will be appreciated, this could be done utilizing a configuration module such as configuration module **410** from **Figure 4****.**

If, in step **530,** the battery level is not below a threshold, the process proceeds to step **540** in which the normal runtime of the application is utilized.

Conversely, if the battery level is found to be below a threshold in step 530, the process proceeds to step **550** in which a low power runtime for the application is utilized.

An example of the above could be a rich-media application that could update the content by providing script or command as per the Open Mobile Alliance Rich Media Environment "OMA RME" specification. The script engine may be more resource consuming than the command method. Upon detection of a battery threshold, the device may disable the script engine. For an RME application where functions are distributed, the device may send a notification to the server, allowing the service to run only the "command" capability, which is less resource consuming for the device side.

### Server Side Actions

Besides or in addition to disabling features on the mobile device, a server can be configured to provide lower battery functionality for the mobile device. Reference is now made to **Figure 6. Figure 6** shows a dataflow diagram between a mobile device and a server side application. A mobile device **610** monitors the battery level of the device, as illustrated by arrow **612.**

Once the battery level falls below a threshold the device may send a notification, as illustrated by arrow **620,** to a server application.

In response to message shown by arrow **620**, the server application can provide less consuming content format for the application data, as illustrated by arrow **630**. Thus, for example, an image rather than a video could be provided by server **615** to mobile device **610** as part of the message shown by arrow **630.**

In the embodiment of Figure 6, the decision to disable or alter certain features of the device based on the battery level could be done remotely by the service provider.

As will be appreciated by those skilled in the art, standard mechanisms such as the OMA Device Profile Evolution "DPE" to check the battery level on the target device from the service side exist. The service provider can act according to the configuration files on the service side that specify battery level thresholds and associated actions. These configuration files could be internal or user provided.

The actions could be conducted remotely over the air using OMA device management or proprietary means.

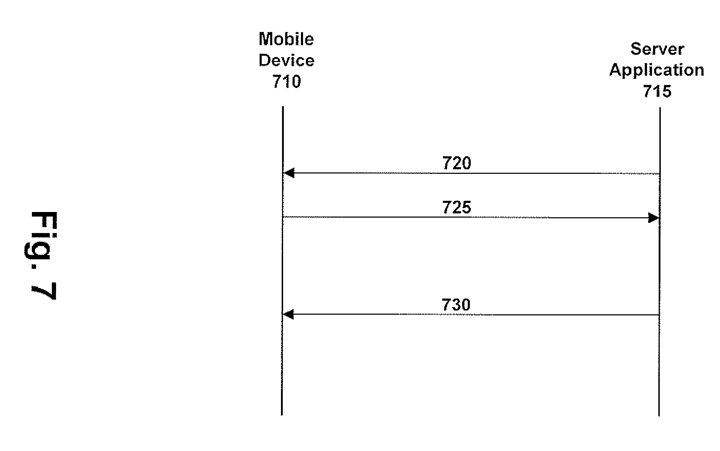

The above is shown in **Figure 7. Figure 7** illustrates the server **715** sending a request **720** to mobile device **710** to obtain a battery level. A response message **725** is shown providing the battery level. Based on the level received in the message shown by arrow **725**, the service provider **715** can act according to configuration files and thresholds stored on the device. Thereafter, a message such as message **730** utilizes low power settings if the battery level is below a threshold.

As will be appreciated, the messages shown by arrows **720** and **725** could be periodically repeated to ensure that messages such as message **730** contain data or data types appropriate for the power level.

As will be appreciated from the above, different thresholds can be associated to a particular function to progressively disable the functionality of the features, applications or tasks. Further different thresholds can be associated to a particular application to progressively disable one or multiple functions on the device or in the application.

When the battery level is increasing, such as by charging, functions or applications can be automatically be re-enabled.
The device run time environment or an application detects the order of successive thresholds to determine if the function should be disabled or enabled.

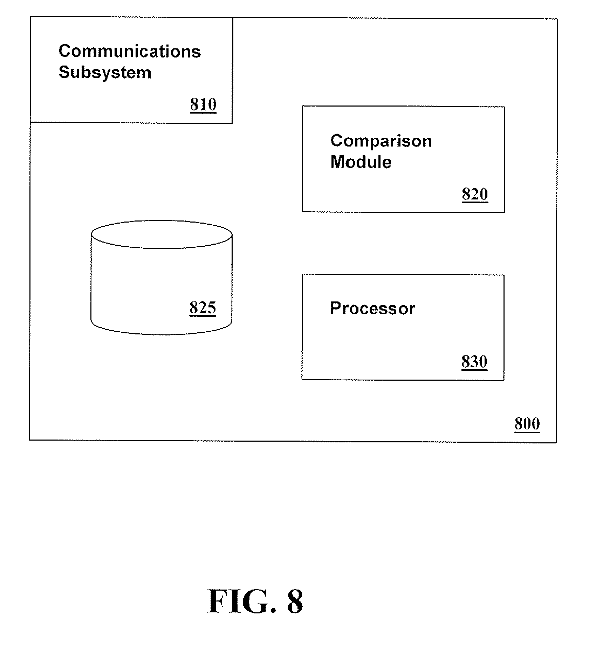

Reference is now made to **Figure 8. Figure 8** shows a block diagram of a simplified server application that can be used in association with **Figures 6** and **7**.

A server application **800** includes a communications subsystem **810** adapted to communicate with a mobile device and to obtain the battery level from the mobile device. As will be appreciated, the battery level could either be requested from the mobile device or could be received as a notification message or alert from the mobile device.

A comparison module **820** utilizes predefined thresholds from storage 825 and compares these thresholds with the battery level to determine whether any features should be disabled or enabled. The predetermined threshold can be set by the user, service provider or device manufacturer. If the threshold is set by the user, this threshold can be propagated from the mobile device to the server application **800** and stored in memory **825.**

A processor **830** utilizes the results from the comparison module **820** and can change a data or data type being sent to the mobile device based on the results of the comparison module. Thus, as described above, if the battery level falls below a predetermined threshold, commands could be used instead of scripts. Further, video display sizes could be limited on the mobile device by the streaming of limited video. Also, in some cases images can be sent instead of video. Other examples would be apparent to those skilled in the art having reference to the present disclosure.

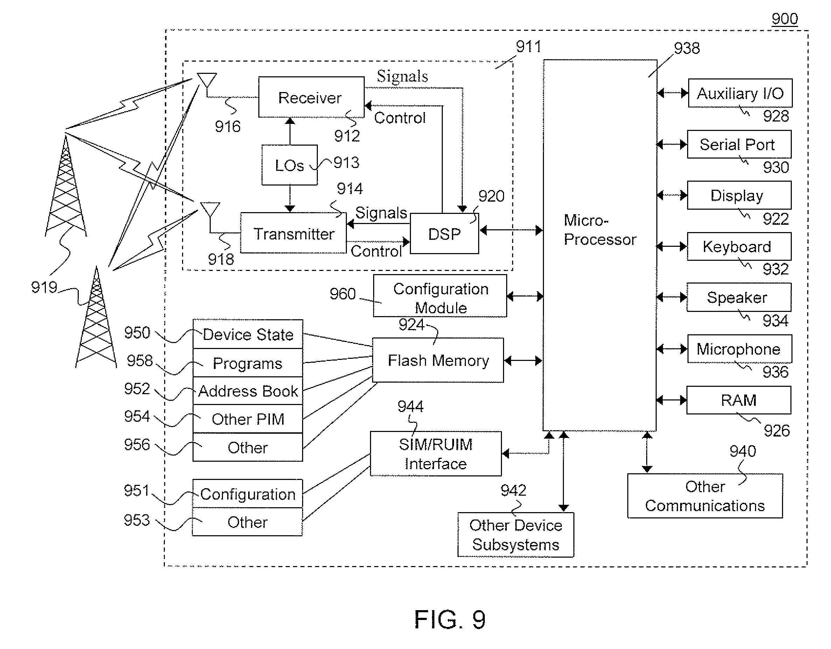

The above can be implemented on any mobile device. One exemplary mobile device is illustrated with reference to **Figure 9****.**

**Figure 9** is a block diagram illustrating a mobile station apt to be used with preferred embodiments of the apparatus and method of the present application. Mobile station **900** is preferably a two-way wireless communication device having at least voice and data communication capabilities. Mobile station 900 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as

### examples.

Where mobile station **900** is enabled for two-way communication, it will incorporate a communication subsystem **911,** including both a receiver **912** and a transmitter **914**, as well as associated components such as one or more, preferably embedded or internal, antenna elements **916** and **918,** local oscillators (LOs) **913,** and a processing module such as a digital signal processor (DSP) **920.** As will be apparent to those skilled in the field of communications, the particular design of the communication subsystem **911** will be dependent upon the communication network in which the device is intended to operate.

Network access requirements will also vary depending upon the type of network **919.** In some CDMA networks network access is associated with a subscriber or user of mobile station **900**. A CDMA mobile station may require a removable user identity module (RUIM) or a subscriber identity module (SIM) card in order to operate on a CDMA network. The SIM/RUIM interface **944** is normally similar to a card-slot into which a SIM/RUIM card can be inserted and ejected like a diskette or PCMCIA card. The SIM/RUIM card can have approximately **94K** of memory and hold many key configuration **951,** and other information **953** such as identification, and subscriber related information.

When required network registration or activation procedures have been completed, mobile station **900** may send and receive communication signals over the network **919**. As illustrated in **Figure 9****,** network **919** can consist of multiple base stations communicating with the mobile device. For example, in a hybrid CDMA 1x EVDO system, a CDMA base station and an EVDO base station communicate with the mobile station and the mobile station is connected to both simultaneously. The EVDO and CDMA 1x base stations use different paging slots to communicate with the mobile device.

Signals received by antenna **916** through communication network **919** are input to receiver **912**, which may perform such common receiver functions as signal amplification, frequency down conversion, filtering, channel selection and the like, and in the example system shown in **Figure 9****,** analog to digital (A/D) conversion. A/D conversion of a received signal allows more complex communication functions such as demodulation and decoding to be performed in the DSP **920.** In a similar manner, signals to be transmitted are processed, including modulation and encoding for example, by DSP **920** and input to transmitter **914** for digital to analog conversion, frequency up conversion, filtering, amplification and transmission over the communication network **919** via antenna **918**. DSP **920** not only processes communication signals, but also provides for receiver and transmitter control. For example, the gains applied to communication signals in receiver **912** and transmitter **914** may be adaptively controlled through automatic gain control algorithms implemented in DSP **920**.

Mobile station **900** preferably includes a microprocessor **938** which controls the overall operation of the device. Communication functions, including at least data and voice communications, are performed through communication subsystem **911.** Microprocessor **938** also interacts with further device subsystems such as the display **922**, flash memory **924**, random access memory (RAM) **926,** auxiliary input/output (I/O) subsystems **928**, serial port **930**, one or more keyboards or keypads **932**, speaker **934**, microphone **936**, other communication subsystem 940 such as a short-range communications subsystem and any other device subsystems generally designated as **942**. Serial port **930** could include a USB port or other port known to those in the art.

Some of the subsystems shown in Figure 9 perform communication-related functions, whereas other subsystems may provide "resident" or on-device functions. Notably, some subsystems, such as keyboard **932** and display **922**, for example, may be used for both communication-related functions, such as entering a text message for transmission over a communication network, and device-resident functions such as a calculator or task list.

Operating system software used by the microprocessor **938** is preferably stored in a persistent store such as flash memory **924,** which may instead be a read-only memory (ROM) or similar storage element (not shown). Those skilled in the art will appreciate that the operating system, specific device applications, or parts thereof, may be temporarily loaded into a volatile memory such as RAM **926**. Received communication signals may also be stored in RAM **926.**

As shown, flash memory **924** can be segregated into different areas for both computer programs **958** and program data storage **950, 952, 954** and **956.** These different storage types indicate that each program can allocate a portion of flash memory **924** for their own data storage requirements. Microprocessor **938**, in addition to its operating system functions, preferably enables execution of software applications on the mobile station. A predetermined set of applications that control basic operations, including at least data and voice communication applications for example, will normally be installed on mobile station **900** during manufacturing. Other applications could be installed subsequently or dynamically.

A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network **919.**
In a preferred embodiment, the PIM data items are seamlessly integrated, synchronized and updated, via the wireless network **919**, with the mobile station user's corresponding data items stored or associated with a host computer system. Further applications may also be loaded onto the mobile station **900** through the network **919**, an auxiliary I/O subsystem **928**, serial port **930**, short-range communications subsystem **940** or any other suitable subsystem **942**, and installed by a user in the RAM **926** or preferably a nonvolatile store (not shown) for execution by the microprocessor **938**. Such flexibility in application installation increases the functionality of the device and may provide enhanced on-device functions, communication-related functions, or both. For example, secure communication applications may enable electronic commerce functions and other such financial transactions to be performed using the mobile station **900.**

In a data communication mode, a received signal such as a text message or web page download will be processed by the communication subsystem **911** and input to the microprocessor **938**, which preferably further processes the received signal for output to the display **922**, or alternatively to an auxiliary I/O device **928**.

A user of mobile station **900** may also compose data items such as email messages for example, using the keyboard **932**, which is preferably a complete alphanumeric keyboard or telephone-type keypad, in conjunction with the display **922** and possibly an auxiliary I/O device **928**. Such composed items may then be transmitted over a communication network through the communication subsystem **911**.

A configure module **960** could be equivalent to configuration modules **310** or **410** from **Figures 4** and **5** and could be executed on processor **938** in one embodiment.

For voice communications, overall operation of mobile station **900** is similar, except that received signals would preferably be output to a speaker **934** and signals for transmission would be generated by a microphone **936**. Alternative voice or audio I/O subsystems, such as a voice message recording subsystem, may also be implemented on mobile station **900**. Although voice or audio signal output is preferably accomplished primarily through the speaker **934**, display **922** may also be used to provide an indication of the identity of a calling party, the duration of a voice call, or other voice call related information for example.

Serial port **930** in **Figure 9**, would normally be implemented in a personal digital assistant (PDA)-type mobile station for which synchronization with a user's desktop computer (not shown) may be desirable, but is an optional device component. Such a port **930** would enable a user to set preferences through an external device or software application and would extend the capabilities of mobile station **900** by providing for information or software downloads to mobile station **900** other than through a wireless communication network. The alternate download path may for example be used to load an encryption key onto the device through a direct and thus reliable and trusted connection to thereby enable secure device communication. As will be appreciated by those skilled in the art, serial port **930** can further be used to connect the mobile device to a computer to act as a modem.

Other communications subsystems **940,** such as a short-range communications subsystem, is a further optional component which may provide for communication between mobile station **900** and different systems or devices, which need not necessarily be similar devices. For example, the subsystem **940** may include an infrared device and associated circuits and components or a Bluetooth™ communication module to provide for communication with similarly enabled systems and devices.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method for enabling or disabling a feature based on a battery level threshold comprising:
checking a battery level;
determining whether the battery level is above or below a predetermined threshold for the feature; and
enabling or disabling the feature based on the result of the determination.

2. The method of claim 1, wherein the predetermined threshold is set by one or more of a user, a service provider and a device supplier.

3. The method of claim 1 or claim 2, wherein the feature is a function, task or application.

4. The method of claim 3, wherein enabling or disabling comprises enabling or disabling optional or unused functions.

5. The method of claim 4, wherein the optional or unused functions include global positioning system, multi-media applications, videoconferencing applications, expanded Internet browsing applications, gaming applications, virus scanning applications or communications subsystems.

6. The method of claim 3, wherein disabling comprises utilizing a lower powered task to accomplish an application function.

7. The method of claim 3, wherein disabling comprises disallowing functions that are not for immediate usage inside an application.

8. A mobile device adapted to enable or disable a feature based on a battery level threshold comprising:
a battery status module adapted to check a level of a battery;
a configuration module adapted to store a battery level threshold for the feature; and
a processor adapted to compare the level of the battery with the battery level threshold for the feature and further adapted to enable or disable the feature based on the comparison.

9. The mobile device of claim 8, wherein the battery level threshold for the feature is set by one or more of a user, a service provider and a device supplier.

10. The mobile device of claim 8 or claim 9, wherein the feature is a function, task or application.

11. The mobile device of claim 10, wherein the processor is adapted to enable or disable optional or unused functions.

12. The mobile device of claim 11, wherein the optional or unused functions include global positioning system, multi-media applications, videoconferencing applications, expanded Internet browsing applications, gaming applications, virus scanning applications or communications subsystems.

13. The mobile device of claim 10, wherein the processor is adapted to disable the feature by utilizing a lower powered task to accomplish an application function.

14. The mobile device of claim 10, wherein the processor is adapted to disable the feature by disallowing functions that are not for immediate usage inside an application.

15. A method for enabling or disabling a feature based on a battery level threshold comprising:
obtaining a battery level at a server application;
comparing the battery level with a preconfigured threshold for the feature; and
modifying data or a data type to be sent to the mobile device based on the result of the comparison.

16. The method of claim 15, wherein modifying provides a less battery consuming content format if the comparison finds the battery level is below the preconfigured threshold for the feature.

17. The method of claim 15, wherein modifying restricts the data size sent to a mobile device if the comparison finds the battery level is below the preconfigured threshold for the feature.

18. The method of claim 15, wherein modifying prohibits data types from being sent to a mobile device if the comparison finds the battery level is below the preconfigured threshold for the feature.

19. The method of any one of claims 15 to 18, wherein obtaining comprises receiving a battery level message from a mobile device.

20. The method of any one of claims 15 to 18, wherein obtaining comprises requesting a battery level from a mobile device.

21. A server application adapted to enable or disable a feature based on a battery level threshold comprising:
a communications subsystem adapted to receive a battery level of a mobile device;
a comparison module adapted to compare the battery level with a preconfigured threshold for the feature; and
a processor adapted to modify a data or data type to be sent to the mobile device based on a result from the comparison module.

22. The server application of claim 21, wherein the processor is adapted to provide a less battery consuming content format if the comparison module finds the battery level is below the preconfigured threshold for the feature.

23. The server application of claim 21, wherein the processor is adapted to restrict the data size sent to a mobile device if the comparison module finds the battery level is below the preconfigured threshold for the feature.

24. The server application of any one of claims 21 to 23, wherein the processor is adapted to prohibit data types from being sent to a mobile device if the comparison module finds the battery level is below the preconfigured threshold for the feature.

25. The server application of any one of claims 21 to 23, wherein the communications subsystem is adapted to request a battery level from a mobile device.
